# EUROPEAN PATENT APPLICATION

(11) **EP 4 282 291 A1**
(43) Date of publication of application: **29.11.2023**
(21) Application number: 21923661.9
(22) Date of filing: 02.02.2021
(51) Int. Cl.: A24F 40/40, A24F 40/46, A24F 40/48, A24F 40/50, A24F 47/00

(54) **ELECTRONIC ATOMIZATION APPARATUS, POWER SUPPLY ASSEMBLY AND SUPPORT ASSEMBLY**

(71) Applicant: Shenzhen Smoore Technology Limited, Shenzhen Guangdong 518102 (CN)
(72) Inventor: XU, Wenxiao, Shenzhen, Guangdong 518102 (CN); WANG, Xinyu, Shenzhen, Guangdong 518102 (CN)
(74) Representative: Westphal, Mussgnug & Partner, Patentanwälte mbB
(86) International application number: PCT/CN2021/074846
(87) International publication number: WO 2022/165631

(57) **Abstract**

The present invention relates to an electronic vaporization device, a power supply component, and a holder component. The holder component includes a holder configured to accommodate a battery core and a conductive structure arranged on the holder. The battery core includes a first end and a second end. The conductive structure extends from the first end of the battery core to the second end of the battery core. The conductive structure includes at least two first elastic abutting electrodes located at the first end of the battery core and at least two second elastic abutting electrodes located at the second end of the battery core. The holder component extends the conductive structure from the first end of the battery core to the second end of the battery core, and locates the first elastic abutting electrode of the conductive structure at the first end of the battery core, and locates the second elastic abutting electrode of the conductive structure at the second end of the battery core, thereby simplifying the power supply component structure, facilitating power supply component assembly, improving assembly efficiency and safety of the power supply component, and facilitating automatic production of the power supply component.

## Description

### FIELD

The present invention relates to vaporization devices, and more specifically, to an electronic vaporization device, a power supply component, and a holder component.

### BACKGROUND

During an assembly process of an existing battery core used for an electronic vaporization device, an operation is complicated. For example, manual welding of a wire is needed. Therefore, a simple, safe, and reliable structure with a fast assembly operation is needed to implement automatic production of the battery core.

### SUMMARY

### Technical Problems

During an assembly process of an existing battery core used for an electronic vaporization device, an operation is complicated. For example, manual welding of a wire is needed. Therefore, a simple, safe, and reliable structure with a fast assembly operation is needed to implement automatic production of the battery core.

### Technical Solutions

A technical problem to be resolved by the present invention is to provide an improved holder component, and further provide an improved electronic vaporization device and power supply component.

A technical solution adopted by the present invention to resolve the technical problem thereof is to provide a holder component, including a holder configured to accommodate a battery core, and a conductive structure arranged on the holder; wherein the battery core includes a first end and a second end, and the conductive structure extends from the first end of the battery core to the second end of the battery core, and
the conductive structure includes at least two first elastic abutting electrodes located proximate to the first end of the battery core and at least two second elastic abutting electrodes located proximate to the second end of the battery core.

Preferably, the holder includes a bottom wall, and the conductive structure is arranged on the bottom wall and is integrally formed with the bottom wall.

Preferably, the conductive structure is integrally formed on a surface of the bottom wall or inside the bottom wall.

Preferably, the battery core includes the first end and the second end extending along the length direction of the battery core.

Preferably, the conductive structure includes at least one conductive member,
the conductive member further includes a conductive connection portion that is elongated, and the entire length of the conductive connection portion is integrally formed on the holder.

Preferably, the conductive structure includes at least two conductive members, the first elastic abutting electrodes of the at least two conductive members extend toward the first end of the battery core; and/or
the second elastic abutting electrodes of the at least two conductive members extend toward the second end of the battery core.

Preferably, the first elastic abutting electrodes of two adjacent conductive members are mirror-symmetrically arranged; and/or the second elastic abutting electrodes of two adjacent conductive members are mirror-symmetrically arranged.

Preferably, the holder includes a first accommodation cavity configured to accommodate the battery core; and
the conductive connection portion is arranged in the first accommodation cavity.

Preferably, the first elastic abutting electrode is configured to elastically abut against a first circuit board arranged on the holder.

Preferably, the holder includes a second accommodation cavity configured to accommodate a first circuit board; and
the first elastic abutting electrode penetrates the second accommodation cavity to abut against the first circuit board.

Preferably, a first conductive layer is arranged at the contact end of the first elastic abutting electrode configured to contact the first circuit board.

Preferably, the first elastic abutting electrode includes a first abutting portion configured to abut against the first circuit board and a first guide portion arranged at one end of the first abutting portion; and
a first conductive layer is arranged at the junction of the first abutting portion and the first guide portion.

Preferably, the second elastic abutting electrode is configured to elastically abut against a second circuit board arranged on the holder.

Preferably, the holder is provided with a third accommodation cavity configured to accommodate the second circuit board; and
the second elastic abutting electrode penetrates the third accommodation cavity to abut against the second circuit board.

Preferably, a second conductive layer is arranged at the contact end of the second elastic abutting electrode configured to contact the second circuit board.

Preferably, the second elastic abutting electrode includes a second abutting portion configured to abut against the second circuit board and a second guide portion arranged at one end of the second abutting portion; and
a second conductive layer is arranged at the junction of the second abutting portion and the second guide portion.

Preferably, a first support and positioning structure that supports and positions the first elastic abutting electrode is arranged on the holder.

Preferably, a second support and positioning structure that supports and positions the second elastic abutting electrode is arranged on the holder.

Preferably, the conductive structure is provided with a through hole mechanically matching with the holder.

Preferably, the conductive structure is sheet shaped; and the thickness direction of the conductive structure is consistent with the thickness direction of the holder.

The present invention further provides a power supply component, including the holder component of the present invention, the first circuit board arranged on the holder component, and/or the second circuit board arranged on the holder component.

The conductive structure on the holder component is conductively connected to the first circuit board and/or the second circuit board.

The present invention further provides an electronic vaporization device, including the power supply component of the present invention, and a vaporizer connected to the power supply component.

### Beneficial Effects:

By implementing the electronic vaporization device, the power supply component, and the holder component of the present invention, the following beneficial effects may be achieved: The holder component extends the conductive structure from the first end of the battery core to the second end of the battery core, and locates the first elastic abutting electrode of the conductive structure at the first end of the battery core, and locates the second elastic abutting electrode of the conductive structure at the second end of the battery core, thereby simplifying the power supply component structure, facilitating power supply component assembly, improving assembly efficiency and safety of the power supply component, and facilitating automatic production of the power supply component.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1 is a schematic structural diagram of an electronic vaporization device according to a first embodiment of the present invention;
FIG. 2 is a schematic structural diagram of a power supply component of the electronic vaporization device shown in FIG. 1;
FIG. 3 is a schematic diagram of a partial structure of the power supply component shown in FIG. 2;
FIG. 4 is a cross-sectional view of a partial structure of the power supply component shown in FIG. 3;
FIG. 5 is a schematic exploded view of a partial structure of the power supply component shown in FIG. 3;
FIG. 6 is a schematic structural diagram of a holder component of the power supply component shown in FIG. 3 that accommodates a battery core, a first circuit board, and a second circuit board;
FIG. 7 is a schematic structural diagram of the holder component of the power supply component shown in FIG. 6;
FIG. 8 is a schematic structural diagram of a holder of the holder component shown in FIG. 7;
FIG. 9 is a schematic structural diagram of a conductive structure of the holder component shown in FIG. 3;
FIG. 10 is a schematic structural diagram of an air guide structure of the power supply component shown in FIG. 3;
FIG. 11 is a schematic structural diagram of a seal member of the power supply component shown in FIG. 3;
FIG. 12 is a schematic structural diagram of a holder component of an electronic vaporization device according to a second embodiment of the present invention that accommodates a battery core, a first circuit board, and a second circuit board;
FIG. 13 is a schematic structural diagram of the holder component of the power supply component shown in FIG. 12; and
FIG. 14 is a schematic structural diagram of a holder component of an electronic vaporization device according to a third embodiment of the present invention.

### DETAILED DESCRIPTION

In order to have a clearer understanding of the technical features, the objectives, and the effects of the present invention, specific implementations of the present invention are now illustrated in detail with reference to the accompanying drawings.

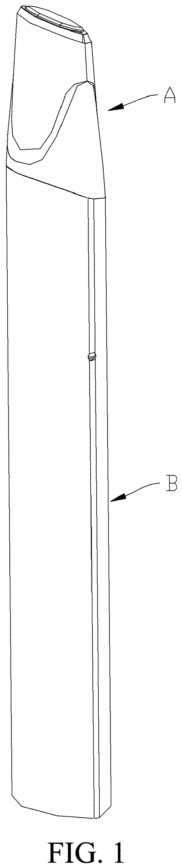

FIG. 1 shows a first embodiment of an electronic vaporization device of the present invention. In this embodiment, the electronic vaporization device includes a vaporizer A and a power supply component B. The vaporizer A may be configured to heat a vaporization medium. The power supply component B may be mechanically and/or electrically connected to the vaporizer A and may provide electrical energy to the vaporizer A.

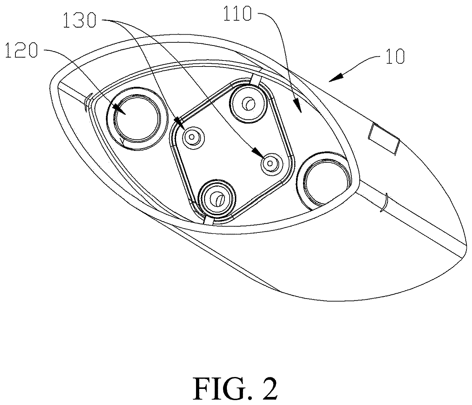

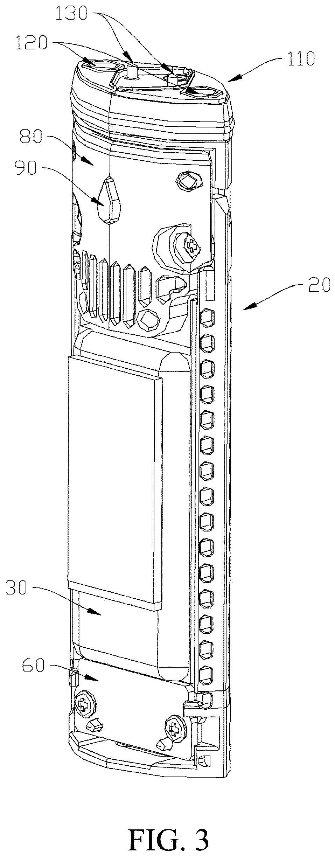

As shown in FIG. 2 to FIG. 5, further, in this embodiment, the power supply component includes a housing 10, a holder component 20, a battery core 30, a first circuit board 40, a charging interface 50, and a second circuit board 60. The housing 10 is configured to accommodate the holder component 20, the battery core 30, and the first circuit board 40. The holder component 20 is arranged in the housing 10, and may support the battery core 30 and the first circuit board 40. The battery core 30 is arranged on the holder component 20, located on a lower portion of the holder component 20, and may provide electrical energy to the vaporizer A. The first circuit board 40 may be arranged on the holder component 20 and may be conductively connected to the battery core 30. The charging interface 50 may be arranged on the holder component 20 and may be configured to be connected to an external power supply to charge the battery core 30. The second circuit board 60 may be arranged on the holder component 20 and may be electrically connected to the charging interface 50 and the first circuit board 40.

Further, in this embodiment, the housing 10 is a cylindrical structure provided with an opening at the end. The housing 10 may be a plastic injection member. Certainly, it may be understood that, in some other embodiments, the housing 10 may alternatively be a metal housing.

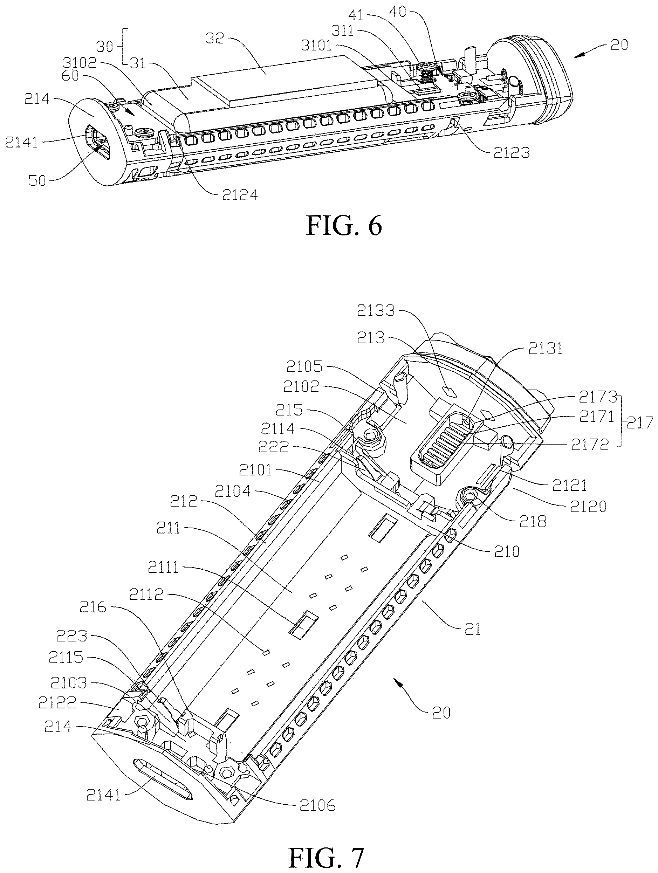

As shown in FIG. 6 and FIG. 7, further, in this embodiment, the holder component 20 may include a holder 21 and a conductive structure 22. The holder 21 may be configured to accommodate the battery core 30 and the first circuit board 40. The conductive structure 22 may be arranged on the holder 21 and may be integrally formed with the holder 21.

Further, in this embodiment, the holder 21 may be substantially flat, and in some embodiments, a cross section of the holder 21 may be elliptical. The holder 21 may be an insulator. Specifically, in some embodiments, the holder 21 may be a plastic injection member. Preferably, the holder 21 may be made of a plastic material. Certainly, it may be understood that in some other embodiments, the holder 21 may not be limited to a plastic material, and may be made of a ceramic material or another insulating material. Certainly, it may be understood that in some embodiments, the holder 21 may not be limited to an insulator, and may be insulated from the conductive structure 22 by arranging the insulator. In this embodiment, the holder 21 may include a bottom wall 211, a side wall 212, a first end wall 213, and a second end wall 214.

The bottom wall 211 may be a long bottom wall. The bottom wall 211 may be provided with cutouts 2111, the cutouts 2111 may be spaced along the length direction of the bottom wall 211, and may be used for facilitating cutting of the conductive structure 22. In some embodiments, the bottom wall 211 may further be provided with a positioning through hole 2112, and the positioning through hole 2112 may be used for positioning the conductive structure 22.

The side wall 212 may be arranged on two opposite sides of the bottom wall 211 and may be spaced from the bottom wall 211. The side wall 212 may be integrally formed with the bottom wall 211, and a hollow structure 2113 may be arranged between the side wall 212 and the bottom wall 211 to facilitate demolding of the entire holder 21. In some embodiments, a first clamping structure 2120 is arranged on the holder 21. Specifically, the first clamping structure 2120 may be located on the side wall 212 and may be configured to clamp the first circuit board 40. Specifically, in some embodiments, the first clamping structure 2120 may include two elastic buckles 2121. The two elastic buckles 2121 may be located on two opposite sides of the holder 21, and may cause the entire holder 21 to have a degree of deformation. Specifically, the elastic buckles may be located on the side wall 212 of the two opposite sides and may be integrally formed with the side wall 212. In some embodiments, the two elastic buckles 2121 may cooperate with each other and may be configured to clamp the first circuit board 40. When a mechanical arm clamps the first circuit board 40 and mounts the first circuit board on the holder 21, arrangement of the two elastic buckles 2121 may cause the first circuit board 40 to be mounted more easily and adapt to the first circuit board 40 with an appropriate amount of deviation, which facilitates automatic production. Further, in this embodiment, a second clamping structure 2122 may be arranged on the holder 21. The second clamping structure 2122 may be configured to clamp the second circuit board 60, and the second clamping structure 2122 may be located on two opposite sides of the holder 21. Specifically, in some embodiments, the second clamping structure 2122 may be located on the side wall 212, and may be clamping positions provided at two side walls that are arranged opposite to each other, and the two clamping structures may cooperate with each other to clamp the second circuit board 60. Further, in this embodiment, the side wall 212 may be provided with a first avoidance hole 2123, and the first avoidance hole 2123 may be used for detection by an infrared detection device. The first avoidance hole 2123 may be in communication with the hollow structure 2113. In this embodiment, the side wall 212 may further be provided with a second avoidance hole 2124. The second avoidance hole 2124 may be spaced from the first avoidance hole 2123 along the length direction of the side wall 212 and may be used for detection by the infrared detection device.

The first end wall 213 may be arranged at the end of the bottom wall 211. Specifically, the first end wall 213 may be located at the end connected to the vaporizer A. In some embodiments, the first end wall 213 may be provided with a vent hole 2131. The vent hole 2131 may be used for air transmission to start an airflow sensing device 42 on the first circuit board 40. In some embodiments, the first end wall 213 may further be provided with a first mounting hole 2132, and the first mounting hole 2132 may be used for mounting of a magnetic member 120. In some embodiments, there may be two first mounting holes 2132, and the two first mounting holes 2132 may be provided sequentially along the length direction of the first end wall 213. In some embodiments, the first end wall 213 may further be provided with a second mounting hole 2133, and there may be two second mounting holes 2133. The two second mounting holes 2133 may be provided sequentially along the length direction of the first end wall 213, may be located between the two first mounting holes 2132, and may be used for mounting of an electrode ejector pin 130.

The second end wall 214 may be arranged at the other end of the bottom wall 211. The second end wall 214 may be provided with an insertion interface 2141 for insertion of a power cable. Certainly, it may be understood that, in some other embodiments, the insertion interface 2141 may not be limited to being connected to a power cable, and may be connected to a data cable and used for data transmission. In some embodiments, the insertion interface 2141 may be provided corresponding to the charging interface 50 to facilitate connection of the charging interface 50 with the power cable. The first end wall 213 may be arranged in parallel with the second end wall 214. The bottom wall 211, the side wall 212, the first end wall 213, and the second end wall 214 may enclose to form an accommodation space provided with an opening and can accommodate the battery core 30 and the circuit board 40.

Further, in some embodiments, the holder 21 may further be provided with a baffle wall 210. The baffle wall 210 may be configured to divide the accommodation space of the holder 21 into a first accommodation cavity 2101 and a second accommodation cavity 2102, and can support and limit the first circuit board 40 to prevent the conductive structure 22 from being crushed. The first accommodation cavity 2101 may be used for accommodating the battery core 30, and the second accommodation cavity 2102 may be used for accommodating the first circuit board 40. In this embodiment, the first accommodation cavity 2101 and the second accommodation cavity 2102 may be independently provided. The first accommodation cavity 2101 and the second accommodation cavity 2102 may be isolated from each other, thereby preventing electrolyte of the battery core 30 from corroding the first circuit board 40 and increasing sensitivity of the airflow sensing device 42. In this embodiment, the first accommodation cavity 2101 and the second accommodation cavity 2102 may both be in a shape of a cuboid, the second accommodation cavity 2102 and the first accommodation cavity 2101 may be provided side by side, and the second accommodation cavity 2102 may be provided near the end of the holder 21 in contact with the vaporizer A. The size of the second accommodation cavity 2102 may be less than the size of the first accommodation cavity 2101. Specifically, the length of the second accommodation cavity 2102 is less than the length of the first accommodation cavity 2101, so as to better prevent the electrolyte of the battery core 30 from corroding the first circuit board 40, and shorten the length of a sensing airway of the airflow sensing device 42, thereby increasing sensitivity of the airflow sensing device 42. In this embodiment, the first accommodation cavity 2101 is correspondingly provided with a first opening 2104. The first opening 2104 is used for placing the battery core 30 in the first accommodation cavity 2101, and the first opening 2140 may be provided corresponding to the bottom wall 211. In this embodiment, the second accommodation cavity 2102 is correspondingly provided with a second opening 2105, and the second opening 2105 may be used for placing the first circuit board 40 in the second accommodation cavity 2102. In this embodiment, the second opening 2105 may alternatively be provided opposite to the bottom wall 211. In this embodiment, the first clamping structure 2120 may be located on two opposite sides of the second accommodation cavity 2102.

In this embodiment, the holder 21 may further include a third accommodation cavity 2103. The third accommodation cavity 2103 may be used for accommodating the charging interface 50 and a third circuit board 30, and the third accommodation cavity 2103 may be provided at the end of the first accommodation cavity 2101 away from the vaporizer A. The third accommodation cavity 2103 may be provided close to the second end wall 214. The third accommodation cavity 2103 may be provided with a third opening 2106; and the third opening 2106 may be used for placing the charging interface 50 and the second circuit board 40 in the third accommodation cavity 2103. In this embodiment, the second clamping structure 2122 may be located on two opposite sides of the third accommodation cavity 2103.

In this embodiment, a first support structure 215 may further be arranged on the holder 21. The first support structure 215 may be located on the bottom wall 211, may protrude toward the second accommodation cavity 2102, may be arranged close to the baffle wall 210, and may be configured to support the conductive structure 22. The first support structure 215 may be a boss arranged protruding from the second accommodation cavity 2102.

In this embodiment, a second support structure 216 may further be arranged on the holder 21. The second support structure 216 may be located on the bottom wall 211, may be arranged protruding toward the second accommodation cavity 2103, and may be located at a separation part of the first accommodation cavity 2101 and the second accommodation cavity 2103 to separate the first accommodation cavity 2101 and the second accommodation cavity 2103. The second support structure 216 may be configured to support the conductive structure 22.

As shown in FIG. 7 to FIG. 8, in this embodiment, the conductive structure 22 may be arranged on the bottom wall 211 and may be integrally formed with the bottom wall 211. Specifically, the conductive structure 22 may be formed inside the bottom wall 211, and is configured to conductively connect the first circuit board 40 and the second circuit board 60. Certainly, it may be understood that in some embodiments, the conductive structure 22 may not be limited to being formed inside the bottom wall 211. In some other embodiments, the conductive structure 22 may be formed on the surface of the bottom wall. In some other embodiments, the conductive structure 22 may not be limited to connecting the first circuit board 40 and the second circuit board 60, and may be configured to connect two other components that need to be conductively connected. In some embodiments, the conductive structure 22 and the bottom wall 211 are integrally formed through injection molding. Certainly, it may be understood that in some other embodiments, the conductive structure 22 may alternatively be integrally formed with the bottom wall 211 through sintering or another manner. The conductive structure 22 may be in a shape of a sheet, and the thickness direction of the conductive structure 22 may be consistent with the thickness direction of the holder 21, that is, the thickness direction of the conductive structure 22 may be consistent with the thickness direction of the bottom wall 211.

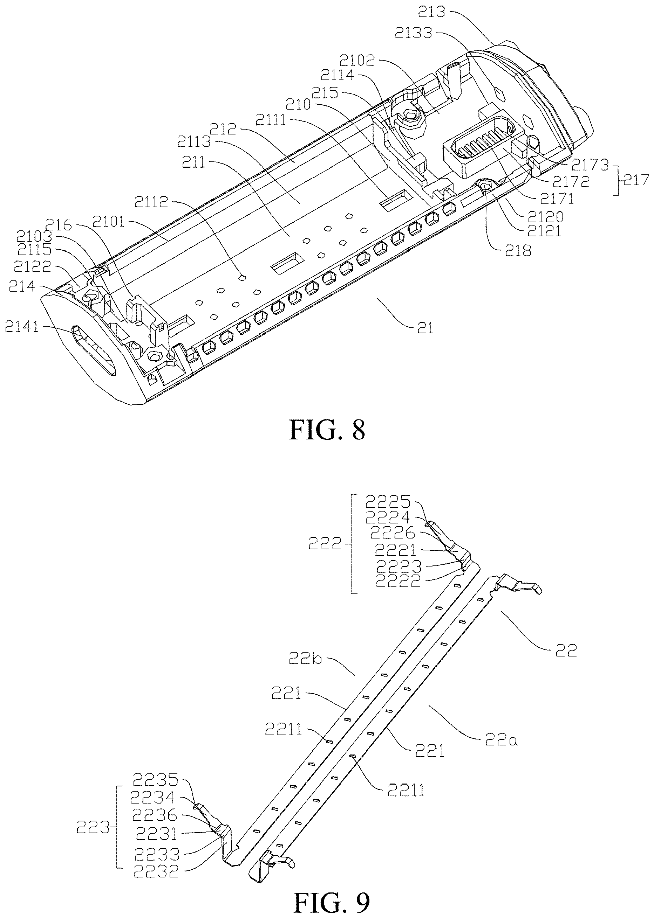

As shown in FIG. 9, further, in this embodiment, the conductive structure 22 may include two conductive members 22a and 22b. The two conductive members 22a and 22b may include a first conductive member 22a and a second conductive member 22b. The first conductive member 22a may be a positive conductive member connected to the positive end of the first circuit board 40 and the second circuit board 60. The second conductive member 22b may be a negative conductive member, and may be connected to the negative end of the first circuit board 40 and the second circuit board 60. It may be understood that, in some other embodiments, a quantity of the conductive members 22a and 22b may not be limited to two, and may be one or more than two. In this embodiment, a structure of the first conductive member 22a and a structure of the second conductive member 22b are substantially the same. In some embodiments, before the conductive structure 22 and the bottom wall 211 are injected, an integrated structure may be formed between the two conductive members 22a and 22b of the conductive structure 22 by arranging a connecting piece. After the conductive structure and the bottom wall 211 are injected, a punching device may be used to penetrate from the cutout 2111 on the bottom wall 211 to punch the connecting piece between the two conductive members 22a and 22b.

Further, in this embodiment, the conductive members 22a and 22b may be sheet-like structures. Specifically, the conductive members 22a and 22b may be metal elastic sheets, and a material of the metal elastic sheets is preferably stainless steel or phosphor copper. Certainly, it may be understood that in some other embodiments, the material of the metal elastic sheets may not be limited to stainless steel or phosphor copper. In this embodiment, the width of the conductive members 22a and 22b may be greater than or equal to 1.0 mm. When the width is less than 1.0 mm, the conductive members easily generate deformation in a process such as assembly and electroplating, thereby destroying consistency of a product.

Further, in this embodiment, the conductive members 22a and 22b may include a conductive connection portion 221, a first elastic abutting electrode 222, and a second elastic abutting electrode 223. Two ends of the conductive connection portion 221 may be respectively connected to the first elastic abutting electrode 222 and the second elastic abutting electrode 223. The first elastic abutting electrode 222 may be arranged at the end of the conductive connection portion 221 and may be configured to elastically abutting against the first circuit board 40. The first elastic abutting electrodes of the two conductive members 22a and 22b are arranged facing the same direction. It may be understood that in some embodiments, the first elastic abutting electrode 222 may be omitted. The second elastic abutting electrode 223 may be arranged at the other end of the conductive connection portion 221 and may be configured to elastically abut against the second circuit board 60. The second elastic abutting electrodes of the two conductive members 22a and 22b may be arranged facing the same direction. It may be understood that in some embodiments, the second elastic abutting electrode 223 may be omitted. In some embodiments, the conductive connection structure 221, the first elastic abutting electrode 222, and the second elastic abutting electrode 223 may be integrally formed. Specifically, the conductive connection structure 221, the first elastic abutting electrode 222, and the second elastic abutting electrode 223 may form an integral structure through bending. In this embodiment, a first hollow structure 2114 is arranged on the holder 21. The first hollow structure 2114 is located on the bottom wall 211 and is located in the second accommodation cavity 2102, and may be arranged corresponding to the first elastic abutting electrode 222 to facilitate demolding of the first elastic abutting electrode 222. In this embodiment, a second hollow structure 2115 is arranged on the holder 21. The second hollow structure 2115 may be located on the bottom wall 211 and located in the third accommodation cavity 2103, and may be arranged corresponding to the second elastic abutting electrode 223 to facilitate demolding of the second elastic abutting electrode 223.

Further, in this embodiment, the conductive connection portion 221 may be an elongated sheet-like structure. The conductive connection portion 221 may be located in the first accommodation cavity 2101, and the entire length may be integrally formed on the bottom wall 211 and fully buried in the bottom wall 211. Certainly, it may be understood that in some other embodiments, the conductive connection structure 221 may alternatively be partially buried in the bottom wall 211. In this embodiment, the bottom wall 211 may include a first end and a second end. The first end may be provided extending toward the second accommodation cavity 2102, and the second end may be provided extending toward the third accommodation cavity 2103. In this embodiment, the conductive connection portion 221 may extend from the first end to the second end. In some embodiments, the conductive connection portion 221 may be provided with a through hole 2211. The through hole 2211 may cooperate with the holder 21 to improve a bonding force between the holder 21 and the conductive members 22a and 22b. Specifically, during an injection molding process of the through hole 2211, plastic used for forming the holder 21 can be bonded to the conductive members 22a and 22b through the through hole 2211 to improve the bonding force between the holder 21 and the conductive members 22a and 22b.

Further, in this embodiment, the first elastic abutting electrode 222 may penetrate from the bottom wall 211 into the second accommodation cavity 2102 and has an elastic deformation capability, and may elastically abut against the first circuit board 40. In this embodiment, the first elastic abutting electrode 222 may extend upward along a plane on which the conductive connection portion 221 is located and then extend toward one side of the conductive connection portion 221. The first elastic abutting electrode 222 may be at a set angle with the plane on which the conductive connection portion 221 is located. The set angle may be a right angle or an obtuse angle. In some embodiments, the first elastic abutting electrode 222 may extend from one side of the first support and positioning structure 215, and may be supported and positioned by the first support and positioning structure 215 to facilitate stability improvement of contact with the first circuit board 40. In this embodiment, the height of the first elastic abutting electrode 222 may be arranged to be lower than the second opening 2105. Certainly, it may be understood that in some other embodiments, the height of the first elastic abutting electrode 222 may alternatively be arranged to be higher than the second opening 2105.

Further, in this embodiment, the first elastic abutting electrode 222 may include a first main body portion 2221, a first binding portion 2222, a second binding portion 2223, a first abutting portion 2224, and a first guide portion 2225. The first main body portion 2221, the first binding portion 2222, the second binding portion 2223, the first abutting portion 2224, and the first guide portion 2225 may be integrally formed.

The first main body portion 2221 may be arranged in parallel with the conductive connection portion 221. Certainly, it may be understood that in some other embodiments, the first main body portion 2221 may not be limited to being in parallel with the conductive connection portion 221. The first main body portion 2221 may be in a shape of a sheet and may be located between the first abutting portion 2224 and the second binding portion 2223.

The first binding portion 2222 may be arranged on a side wall at the end of the conductive connection portion 221, may be bonded to the conductive connection portion 221, and may be arranged perpendicular to the conductive connection portion 221. Certainly, it may be understood that in some other embodiments, the first binding portion 2222 may not be limited to being arranged perpendicular to the conductive connection portion 221. In some embodiments, the first binding portion 2222 may be integrally formed on the holder 21. Specifically, in some embodiments, the first binding portion 2222 may be integrally formed in the first support and positioning structure 215, and may be integrally formed with the first support and positioning structure 215 through injection molding, thereby better fixing the first elastic abutting electrode 222.

The second binding portion 2223 may be arc-shaped, and may be connected to the first binding portion 2222 and the first main body portion 2221, thereby being connected to the first binding portion 2222 and the first abutting portion 2224.

In some embodiments, the first abutting portion 2224 may be arranged at the end of the first main body portion 2221 away from the first binding portion 2222, and the first abutting portion and the first main body portion 2221 are obliquely arranged. Specifically, the first abutting portion 2224 is arranged extending along the first main body portion 2221 in the oblique upward direction. The first abutting portion 2224 may be configured to abut against a circuit board on the holder. Specifically, in some embodiments, the first abutting portion 2224 may elastically abut against the first circuit board 40. The first circuit board 40 is conductively connected to the conductive members 22a and 22b in an elastic contact manner, thereby reducing welding and simplifying a process. The first abutting portion 2224 may cause the first elastic abutting electrode 222 to have an elastic deformation space, so that the first elastic abutting electrode 222 forms good contact with the first circuit board 40. In some embodiments, the width of the first abutting portion 2224 may be less than the width of the first main body portion 2221, thereby reducing an elastic force applied by the first abutting portion 2224 on the first circuit board 40. In some embodiments, the junction of the first main body portion 2221 and the first abutting portion 2224 may be bent to form a first deformation portion 2226, so that deformation of the first abutting portion 2224 is controllable.

In some embodiments, the first guide portion 2225 may be arranged at the end of the first abutting portion 2224. Specifically, the first guide portion 2225 may be arranged at the end of the first abutting portion 2224 away from the first main body portion 2221 and arranged bending with the first abutting portion 2224. The first guide portion 2225 may be configured to guide the first abutting portion 2224 abutting against the first circuit board 40 and facilitate generation of elastic deformation of the first abutting portion 2224. In some embodiments, a first conductive layer is arranged at the contact end of the first elastic abutting electrode 222 and the first circuit board 40. Specifically, in this embodiment, the first conductive layer may be arranged at the junction of the first abutting portion 2224 and the first guide portion 2225. The first conductive layer may be a metal conductive layer, and a material of the metal conductive layer may preferably be gold. The metal conductive layer may be arranged on the surface of the juncture of the first abutting portion 2224 and the first guide portion 2225 in an electroplating manner, thereby reducing resistance, so that conductive connection of the first elastic abutting electrode 222 and the first circuit board 40 is more reliable.

Further, in this embodiment, the second elastic abutting electrode 223 may penetrate from the bottom wall 211 into the second accommodation cavity 2103 and has an elastic deformation capability to abut against the second circuit board 60. In this embodiment, the second elastic abutting electrode 223 may be arranged extending upward along the plane on which the conductive connection portion 221 is located and then extends toward the side of the conductive connection portion 221. The second elastic abutting electrode 223 may be at a set angle with the plane on which the conductive connection portion 221 is located. The set angle may be a right angle or an obtuse angle. In some embodiments, the second elastic abutting electrode 223 may extend from the side of the second support and positioning structure 216, and may be supported and positioned by the second support and positioning structure 216 to facilitate stability improvement of contact with the first circuit board 60. In this embodiment, the height of the second elastic abutting electrode 223 may arranged to be lower than the third opening 2106. Certainly, it may be understood that in some other embodiments, the height of the second elastic abutting electrode 223 may alternatively arranged to be higher than the third opening 2106. In this embodiment, the first elastic abutting electrode 222 and the second elastic abutting electrode 223 located on the same conductive connection portion 221 may be located on the same side of the conductive connection portion 221.

Further, in this embodiment, the second elastic abutting electrode 223 may include a second main body portion 2231, a second binding portion 2232, a fourth binding portion 2233, a second abutting portion 2234, and a second guide portion 2235. The second main body portion 2231, the third binding portion 2232, the fourth binding portion 2233, the second abutting portion 2234, and the second guide portion 2235 may be integrally formed.

The second main body portion 2231 may be arranged in parallel with the conductive connection portion 221. Certainly, it may be understood that in some other embodiments, the second main body portion 2231 may not be limited to being in parallel with the conductive connection portion 221. The second main body portion 2231 may be in a shape of a sheet and may be located between the second abutting portion 2234 and the fourth binding portion 2233.

The third binding portion 2232 may be arranged on a side wall at the end of the conductive connection portion 221, may be bonded to the conductive connection portion 221, and may be arranged perpendicular to the conductive connection portion 221. Certainly, it may be understood that in some other embodiments, the third binding portion 2232 may not be limited to being arranged perpendicular to the conductive connection portion 221. In some embodiments, the third binding portion 2232 may be integrally formed on the holder 21. Specifically, in some embodiments, the third binding portion 2232 may be integrally formed in the second support and positioning structure 216, and may be integrally formed with the second support and positioning structure 216 through injection molding, thereby better fixing the second elastic abutting electrode 223.

The fourth binding portion 2233 may be arc-shaped, and may connect the third binding portion 2232 and the second main body portion 2231, thereby connecting the third binding portion 2232 and the second abutting portion 2234.

In some embodiments, the second abutting portion 2234 may be arranged at the end of the second main body portion 2231 away from the fourth binding portion 2233, and the second abutting portion and the second main body portion 2231 are obliquely arranged. Specifically, the second abutting portion 2234 is arranged along the second main body portion 2231 in the oblique upward direction. The second abutting portion 2234 may be configured to abut against a circuit board on the holder. Specifically, in some embodiments, the second abutting portion 2234 may elastically abut against the second circuit board 60. The second circuit board 60 is conductively connected to the conductive members 22a and 22b in an elastic contact manner, thereby reducing welding and simplifying a process. The second abutting portion 2234 may cause the second elastic abutting electrode 223 to have an elastic deformation space, so that the second elastic abutting electrode 223 forms good contact with the second circuit board 60. In some embodiments, the width of the second abutting portion 2234 may be less than the width of the second main body portion 2231, thereby reducing an elastic force applied by the second abutting portion 2234 on the second circuit board 60. In some embodiments, the junction of the second main body portion 2231 and the second abutting portion 2234 may be bent to form a second deformation portion 2236, so that deformation of the second abutting portion 2234 is controllable.

In some embodiments, the second guide portion 2235 may be arranged at the end of the second abutting portion 2234. Specifically, the second guide portion 2235 may be arranged at the end of the second abutting portion 2234 away from the second main body portion 2231 and arranged bending with the second abutting portion 2234. The second guide portion 2235 may be configured to guide the second abutting portion 2234 abutting against the second circuit board 60 and facilitate generation of elastic deformation of the second abutting portion 2234. In some embodiments, a second conductive layer is arranged at the contact end of the second elastic abutting electrode 223 and the second circuit board 60. Specifically, in this embodiment, the second conductive layer may be arranged at a juncture of the second abutting portion 2234 and the second guide portion 2235. The second conductive layer may be a metal conductive layer, and a material of the metal conductive layer may preferably be gold. The metal conductive layer may be arranged on the surface of the juncture of the second abutting portion 2234 and the second guide portion 2235 in an electroplating manner, thereby reducing resistance, so that conductive connection of the second elastic abutting electrode 223 and the second circuit board 60 is more reliable.

In this embodiment, the first elastic abutting electrodes 222 of the two conductive members 22a and 22b may both extend toward the first end of the battery core, and the extension directions of the first elastic abutting electrodes 222 of two or more conductive members 22a and 22b are set to be the same, which facilitates implementation of automatic assembly. Connection of top ends of the first elastic abutting electrodes 222 of the two conductive members 22a and 22b may not intersect with the side wall 212 of the holder 21 to facilitate infrared detection on the first elastic abutting electrodes 222 of the two conductive members 22a and 22b. That is, when the first elastic abutting electrode 222 is arranged lower than the side wall 212, the top end of the first elastic abutting electrode 222 may be observed through the first avoidance hole 2123, and the infrared detection device emits an infrared light source from the first avoidance hole 2123 to the first elastic abutting electrodes 222 of the first conductive member 22a and the second conductive member 22b. In this embodiment, the first elastic abutting electrodes 222 of the two adjacent conductive members 22a and 22b may be mirror-symmetrically arranged, that is, the first elastic abutting electrodes 222 of the first conductive member 22a and the second conductive member 22b may be mirror-symmetrically arranged. Specifically, the first elastic abutting electrode 222 of the first conductive member 22a and the first elastic abutting electrode 222 of the second conductive member 22b may be arranged along the width direction of the bottom wall 211 and extending in opposite directions, thereby helping the infrared detection device perform infrared detection on the first elastic abutting electrode 222 of the first conductive member 22a and the first elastic abutting electrode 222 of the second conductive member 22b. It may be understood that, in some other embodiments, the first elastic abutting electrodes 222 of the two conductive members 22a and 22b may not be limited to being mirror-symmetrically arranged. In this embodiment, the first end wall 213 includes a plane arranged opposite to the conductive members 22a and 22b. The first elastic abutting electrodes 222 of the two adjacent conductive members 22a and 22b may be arranged extending in the plane direction parallel to the first end wall 213 and be respectively arranged corresponding to the first avoidance hole 2123. After the first conductive member 22a and the second conductive member 22b are injection molded with the holder 21, a conventional infrared detection device may be used to emit an infrared light source from the first avoidance hole 2123 to the first elastic abutting electrodes 222 of the first conductive member 22a and the second conductive member 22b, obtain infrared images of the first elastic abutting electrodes 222 of the first conductive member 22a and the second conductive member 22b, and determine whether the first conductive member 22a and the second conductive member 22b completely overlap by recognizing and processing the infrared images. Specifically, whether the infrared images of the first abutting portion 2224 of the first elastic abutting electrodes 222 of the first conductive member 22a and the second conductive member 22b completely overlap can be determined. Completely overlap means that a deviation of the infrared images of the first elastic abutting electrodes 222 of the first conductive member 22a the second conductive member 22b is within a predetermined range in the horizontal direction and the vertical direction. When the first elastic abutting electrodes 222 of the first conductive member 22a and the second conductive member 22b completely overlap, the first elastic abutting electrodes 222 of the first conductive member 22a and the second conductive member 22b are mounted on the same horizontal line, and the first elastic abutting electrodes 222 of the first conductive member 22a and the second conductive member 22b may be in good contact with the first circuit board 40. When the first elastic abutting electrodes 222 of the first conductive member 22a and the second conductive member 22b do not overlap for a most part or do not overlap at all (an overlapping range is not within the predetermined range), the first elastic abutting electrodes 222 of the first conductive member 22a and the second conductive member 22b are not mounted on the same horizontal line. After the first circuit board 40 is mounted with the first elastic abutting electrodes 222 of the first conductive member 22a and the second conductive member 22b, a pre-pressure applied by the first circuit board 40 to the first elastic abutting electrode 222 of the first conductive member 22a and a pre-pressure applied by the first circuit board 40 to the first elastic abutting electrode 222 of the second conductive member 22b are different, so that contact resistance of the first elastic abutting electrode 222 of the first conductive member 22a and the first circuit board 40 and contact resistance of the first elastic abutting electrode 222 of the second conductive member 22b are different, so that contact stability of the first conductive member 22a and the first circuit board 40 and contact stability of the second conductive member 22b and the first circuit board 40 are not good.

In this embodiment, the second elastic abutting electrodes 223 of the two conductive members 22a and 22b may both extend toward the second end of the battery core, and the extension directions of the second elastic abutting electrodes 223 of two or more conductive members 22a and 22b are set to be the same, which facilitates implementation of automatic assembly. Connection of top ends of the second elastic abutting electrodes 223 of the two conductive members 22a and 22b may not intersect with the side wall 212 of the holder 21 to facilitate infrared detection on the second elastic abutting electrodes 223 of the two conductive members 22a and 22b. That is, when the second elastic abutting electrode 223 is arranged lower than the side wall 212, the top end of the second elastic abutting electrode 223 may be observed through the first avoidance hole 2123, and the infrared detection device emits an infrared light source from the first avoidance hole 2123 to the second elastic abutting electrodes 223 of the first conductive member 22a and the second conductive member 22b. In this embodiment, the second elastic abutting electrodes 223 of the two adjacent conductive members 22a and 22b may be mirror-symmetrically arranged, that is, the second elastic abutting electrodes 223 of the first conductive member 22a and the second conductive member 22b may be mirror-symmetrically arranged. Specifically, the second elastic abutting electrode 223 of the first conductive member 22a and the second elastic abutting electrode 223 of the second conductive member 22b may be arranged along the width direction of the bottom wall 211 and extending in opposite directions, thereby helping the infrared detection device perform infrared detection on the second elastic abutting electrode 223 of the first conductive member 22a and the second elastic abutting electrode 223 of the second conductive member 22b. It may be understood that, in some other embodiments, the second elastic abutting electrodes 223 of the two conductive members 22a and 22b may not be limited to being mirror-symmetrically arranged. In this embodiment, the second end wall 214 includes a plane arranged opposite to the conductive members 22a and 22b. The second elastic abutting electrodes 223 of the two adjacent conductive members 22a and 22b may be arranged extending in the plane direction parallel to the second end wall 214 and be respectively arranged corresponding to the second avoidance hole 2124. After the first conductive member 22a and the second conductive member 22b are injection molded with the holder 21, a conventional infrared detection device may be used to emit an infrared light source from the second avoidance hole 2124 to the second elastic abutting electrodes 223 of the first conductive member 22a and the second conductive member 22b, obtain infrared images of the second elastic abutting electrodes 223 of the first conductive member 22a and the second conductive member 22b, and determine whether the first conductive member 22a and the second conductive member 22b completely overlap by recognizing and processing the infrared images. Specifically, whether the infrared images of the second abutting portion 2234 of the second elastic abutting electrodes 223 of the first conductive member 22a and the second conductive member 22b completely overlap can be determined. Completely overlap means that a deviation of the infrared images of the second elastic abutting electrodes 223 of the first conductive member 22a the second conductive member 22b is within a predetermined range in the horizontal direction and the vertical direction. When the second elastic abutting electrodes 223 of the first conductive member 22a and the second conductive member 22b completely overlap, the second elastic abutting electrodes 223 of the first conductive member 22a and the second conductive member 22b are mounted on the same horizontal line, and the second elastic abutting electrodes 223 of the first conductive member 22a and the second conductive member 22b may be in good contact with the second circuit board 60. When the second elastic abutting electrodes 223 of the first conductive member 22a and the second conductive member 22b do not overlap for a most part or do not overlap at all (an overlapping range is not within the predetermined range), the second elastic abutting electrodes 223 of the first conductive member 22a and the second conductive member 22b are not mounted on the same horizontal line. After the second circuit board 60 is mounted with the second elastic abutting electrodes 223 of the first conductive member 22a and the second conductive member 22b, a pre-pressure applied by the second circuit board 60 to the second elastic abutting electrode 223 of the first conductive member 22a and a pre-pressure applied by the second circuit board 60 to the second elastic abutting electrode 223 of the second conductive member 22b are different, so that contact resistance of the second elastic abutting electrode 223 of the first conductive member 22a and the second circuit board 60 and contact resistance of the second elastic abutting electrode 223 of the second conductive member 22b and the second circuit board 60 are different, so that contact stability of the first conductive member 22a and the second circuit board 60 and contact stability of the second conductive member 22b and the second circuit board 60 are not good.

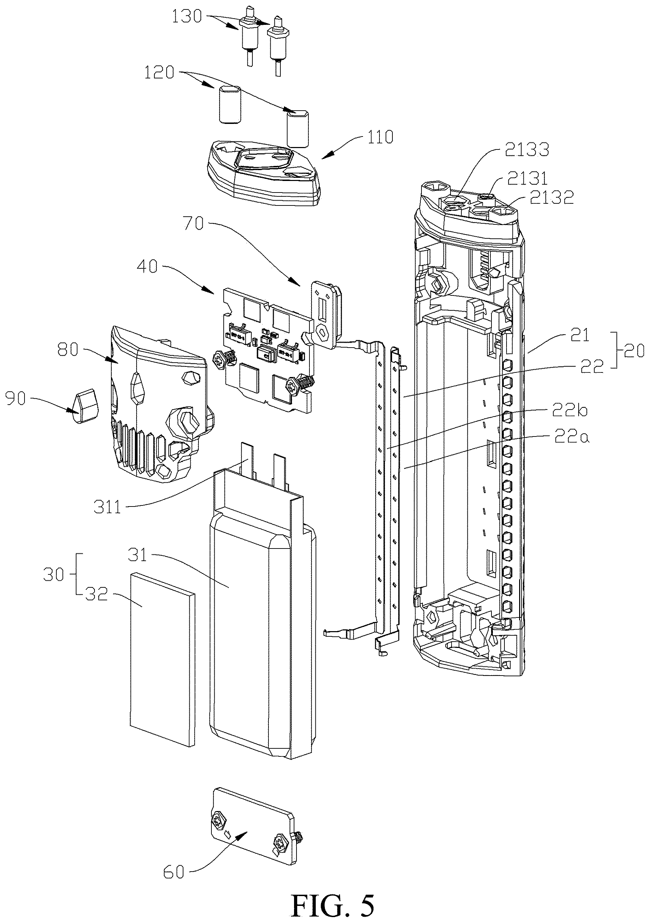

As shown in FIG. 5 and FIG. 6, further in this embodiment, the battery core 30 may be accommodated in the first accommodation cavity 2101. The battery core 30 may be a charging battery and may supply power through an external power supply, thereby continuously providing electrical energy to the vaporizer, thereby improving cycle performance of the power supply component and reducing resource waste. In this embodiment, the battery core 30 may include a battery core body 31 and a protective plate 32. The battery core body 31 may be accommodated in the first accommodation cavity 2101, and the protective plate 32 may be attached to the surface of the battery core body 31. The end of the battery core body 31 may be provided with an electrode plate 311 extending toward the second accommodation cavity 2102 and connected to the first circuit board 40. There may be two electrode plates 311, the two electrode plates may be a positive electrode plate and a negative electrode plate, and may be welded to the first circuit board 40. The battery core 30 may include a first end 3101 and a second end 3102. The first end 3101 and the second end 3102 may extend along the length direction of the battery core 30. The conductive structure may extend from the first end 3101 of the battery core 30 toward the second end 3102 of the battery core 30, and at least two of the first elastic abutting electrodes 222 of the conductive structure 22 are located at the first end 3101 of the battery core 30. Specifically, the first elastic abutting electrode 222 may extend from the bottom wall 211 along the first end 3101 of the battery core 30, and at least two of the second elastic abutting electrodes 223 of the conductive structure 22 are located at the second end of the battery core 30. Specifically, the second elastic abutting electrode 223 may extend from the bottom wall 211 along the second end 3102 of the battery core 30.

Further, in this embodiment, the first circuit board 40 may be accommodated in the second accommodation cavity 2102. Certainly, in some other embodiments, the first circuit board 40 may be located at the second opening 2105 of the second accommodation cavity 2102 and may be arranged higher than the second opening 2105. In this embodiment, the first circuit board 40 may be a main control board, and a bonding pad 41 may be arranged on the first circuit board 40. There may be two bonding pads 41, and the two bonding pads may be arranged corresponding to two electrode plates 311 of the battery core 30 for the electrode plates 311 welded thereon. In this embodiment, the power supply component B may further include an airflow sensing device 42. The airflow sensing device 42 may be arranged on the holder 21. Specifically, the airflow sensing device 42 may be arranged on the first circuit board 40, may be conductively connected to the first circuit board 40, and may be configured to start the vaporizer A. In some embodiments, the airflow sensing device 42 may be a MEMS sensor.

Further, in this embodiment, the charging interface 50 may be located in the third accommodation cavity 2103 and may be arranged corresponding to the insertion interface 2141. In some embodiments, the charging interface 50 may be a USB interface. Certainly, it may be understood that in some other embodiments, the charging interface 50 may not be limited to a USB interface.

Further, in this embodiment, the second circuit board 60 may be a charging circuit board, may be conductively connected to the charging interface 50, and may be conductively connected to the first circuit board 40 through the conductive members 22a and 22b. When the battery core 30 of the electronic vaporization device needs to be charged, a power cable connected to the external power supply can be inserted in the insertion interface 2141 to be conductively connected to the charging interface 50. Electrical energy can be accessed from the charging interface 50, and flows through the second circuit board 60, the conductive member 22a and 22b, the first circuit board 40, and then enters the battery core 30.

Further, in this embodiment, the power supply component may further include an air guide member 70. The air guide member 70 may be configured to guide air to the airflow sensing device 42 to facilitate starting of the airflow sensing device 42. Further, in this embodiment, the air guide member 70 may be located in the second accommodation cavity 2102. In some embodiments, the air guide member 70 may be a silicone member. Certainly, it may be understood that in some other embodiments, the air guide member 70 may not be limited to a silicone member, and may be made of another soft material. The air guide member 70 may be arranged on the side of the first circuit board 40 arranged opposite to the airflow sensing device 42 and may be conducted with the airflow sensing device 42.

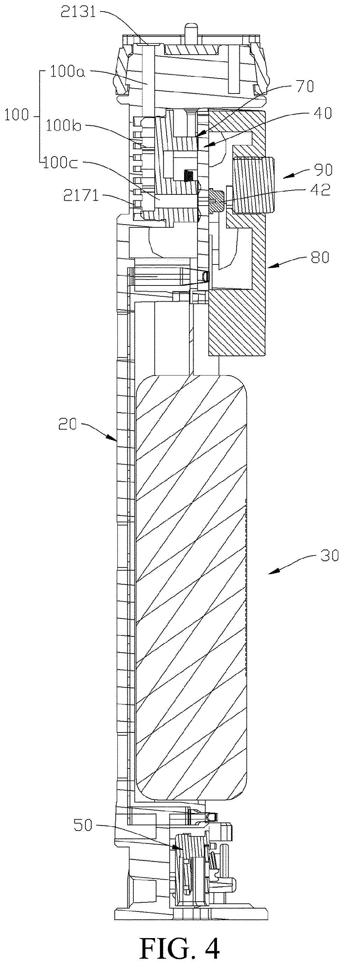

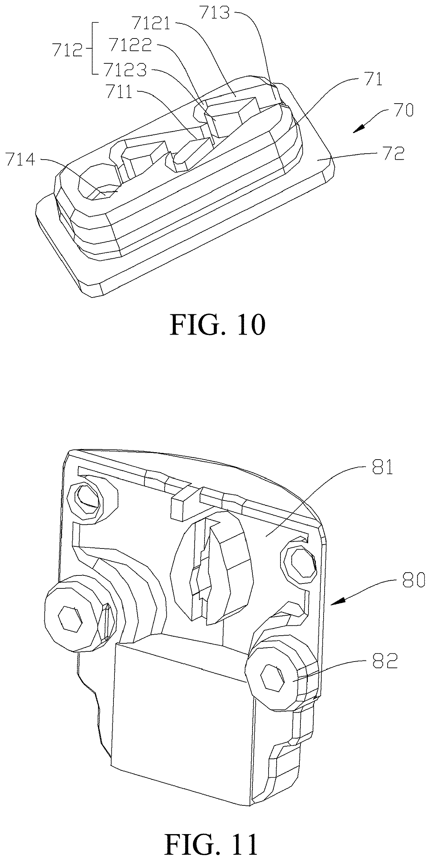

As shown in FIG. 4 and FIG. 10, further, in this embodiment, the air guide member 70 may include an embedded portion 71. The embedded portion 71 may be embedded and mounted in a liquid leakage-proof structure 217 arranged on the holder 21. The embedded portion 71 may be substantially rectangular. Certainly, it may be understood that in some other embodiments, the embedded portion 71 may not be limited to being rectangular. The embedded portion 71 may be provided with an air guide groove 711. The air guide groove 711 may be a main vent groove, and may be provided along the length direction of the embedded portion 71, may be in communication with the vent hole 2131 on the first end wall 213, and may be configured to guide air of the airflow sensing device 42 to the vent hole 2131, so that the airflow sensing device 42 generates a negative pressure. In this embodiment, the air guide groove 711 may be linearly distributed and provided at a center. In this embodiment, the air guide member 70 further includes at least one reflux groove 712. The reflux groove 712 may be provided on the embedded portion 71. There may be a plurality of reflux grooves, and a plurality of reflux grooves 712 may be distributed on two opposite sides of the air guide groove 711. The reflux groove 712 may be in communication with the air guide groove 711, and may be used for increasing a fluid path, reduce condensate refluxing to the first circuit board 40, and preventing the condensate from contaminating the first circuit board 40 and the airflow sensing device 42. The reflux groove 712 and the air guide groove 711 may be obliquely arranged to form a set angle, and the set angle may be an acute angle. Specifically, the set angle may be 30 to 60 degrees, preferably 45 degrees. By obliquely providing the reflux groove 712 at an acute angle relative to the longitudinal axis of the air guide groove 711, a structural space can be optimized.

Further, in this embodiment, the reflux groove 712 may include a flow portion 7121, a return portion 7122, and a communication portion 7123. The flow portion 7121 may be in communication with the air guide groove 711, and condensate can flow from the air guide groove 711 into the flow portion 7121. The return portion 7122 may be in communication with the air guide groove 711 and the flow portion 7121, the return portion 7122 and the flow portion 7121 may be arranged in a straight line, and the flow portion 7121 and the return portion 7122 may be arranged in parallel. Certainly, it may be understood that in some other embodiments, the return portion 7122 and the flow portion 7121 may not be limited to being arranged in a straight line, and may alternatively be arranged in a curve. In some other embodiments, the flow portion 7121 and the return portion 7122 may not be limited to a parallel arrangement, and may alternatively be in a splayed distribution. The communication portion 7123 may be configured to communicate the flow portion 7121 and the return portion 7122. The condensate may flow from the flow portion 7121, and flow through the communication portion 7123 to the return portion 7122, and returns from the return portion 7122 to the air guide groove 711.

Further, in this embodiment, the embedded portion 71 may further be provided with a first slot 713 and a second slot 714. The first slot 713 may be provided at the end of the air guide groove 711, may be in communication with the vent hole 2131, and may be used for fluid to flow in or airflow to flow out. The second slot 714 may be provided at the other end of the air guide groove 711 and may be in communication with the airflow sensing device 42 for outputting air to the air guide groove 711.

Further, in this embodiment, the air guide member 70 may further include a boss 72. The boss 71 may be arranged on the side of the embedded portion 71 opposite to the air guide groove 711 and extend outward, may support the embedded portion 71, prevent the air guide groove 711 on the air guide member 70 and the reflux groove 712 from deforming, and may form a seal structure with the liquid leakage-proof structure 217 on the holder 21 to prevent condensation from flowing out, and enhance a seal effect of the liquid leakage-proof structure 217 and the air guide structure 70.

As shown in FIG. 5 and FIG. 11, further, in this embodiment, a seal member 80 may be arranged at an opening of the second accommodation cavity 2102, the seal member 80 may be pressed on the first circuit board 40 and may be fixedly connected to the holder 21 through a screw. In this embodiment, the seal member 80 may include a body 81 and a positioning post 82 arranged on the body 81. The positioning post 82 is provided with a through hole, and the through hole may be penetrated by a screw. In this embodiment, the bottom wall 211 of the holder 21 may be provided with a screw hole 218. The screw hole 218 may be located in the second accommodation cavity 2102, may be provided corresponding to the positioning post 82 and in communication with the through hole on the positioning post 82, and may be screwed to a screw, thereby detachably connecting the seal member 80 and the holder 21.

Further, in this embodiment, the power supply component B may further include a light post 90. The light post 90 may be arranged on the seal member 80, may be arranged penetrating from the housing 10, may be connected to the first circuit board 40, and may be configured to display a use state of the vaporizer A.

Further, in this embodiment, the power supply component may further include an airflow channel 100. The airflow channel 100 may be a start airway that starts the airflow sensing device 42. In this embodiment, the airflow channel 100 may be in communication with the vent hole 2131 and the airflow sensing device 42. In this embodiment, the airflow channel 100 may include a main channel 100a, a first communication channel 100b, and a second communication channel 100c. The main channel 100a may be in communication with the airflow sensing device 42 and may be used for starting the airflow sensing device 42, and the reflux groove 712 may be in communication with the main channel 100a. The first communication channel 100b may be located at the end of the main channel 100a and may be in communication with outside and the main channel 100a. Specifically, the first communication channel 100b may be formed in the vent hole 2131 to communicate the vent hole 2131 and the main channel 100a. The second communication channel 100c may be located at the other end of the main channel 100a and may be used for communicating the main channel 100a and the airflow sensing device 42. The second communication channel 100c may be formed in the embedded portion 71 of the air guide member 70, and may communicate the second slot 714 and the airflow sensing device 42.

Further, in this embodiment, a liquid leakage-proof structure 217 may be arranged in the airflow channel 100. The liquid leakage-proof structure 217 may be located on the holder 21 and integrally formed with the holder 21, and may be configured to prevent leakage of a liquid medium of the airflow channel. The liquid leakage-proof structure 217 may be located in the second accommodation cavity 2102 of the holder 21, and may be located on the bottom wall 211, and may be integrally formed with the bottom wall 211 through injection molding. Specifically, in some embodiments, the liquid leakage-proof structure 217 may be integrally formed with the bottom wall 211 through injection molding. In this embodiment, the liquid leakage-proof structure 217 may be arranged toward the reflux groove 712 and form the main channel 100a with the air guide member 70. In this embodiment, the liquid leakage-proof structure 217 may form the main channel 100a with the air guide groove 711 of the air guide member 70.

Further, in this embodiment, the liquid leakage-proof structure 217 may include a liquid absorbing groove 2171. The liquid absorbing groove 2171 may be provided on the holder 21, may located in the second accommodation cavity 2102, and may located on the bottom wall 211. The liquid absorbing groove 2171 may be a capillary groove that may absorb a liquid medium flowing out of the airflow channel by generating a capillary force, thereby reducing corrosion of the liquid medium to the airflow sensing device 42 and the first circuit board 40. In some embodiments, there may be a plurality of liquid absorbing grooves 2171. The plurality of liquid absorbing grooves 2171 are arranged side by side in the direction away from the vent hole 2131, thereby gradually storing the liquid medium. Specifically, the liquid absorbing groove may be arranged side by side in the air flow direction of the airflow channel 100. Further, in this embodiment, the liquid absorbing groove 2171 may be a strip-shaped groove. The liquid absorbing groove 2171 may be provided extending along two sides of the vent hole 2131 in the air inlet direction perpendicular to the vent hole 2131, that is, a horizontal slot, thereby slowing down time that the condensate flows down. Further, in some embodiments, the width of the liquid absorbing groove 2171 may be 0.3 to 0.4 mm.

Further, in this embodiment, the liquid leakage-proof structure 217 may further include a groove wall 2172. The groove wall 2172 may be substantially in a cuboid structure, may be a frame, and may be arranged on periphery of the liquid absorbing groove 2171, so that the plurality of liquid absorbing grooves 2172 are provided therein. The groove wall 2172 may encloses to form an embedded groove 2173, and the embedded groove 2173 may be used for the air guide member 70 to be embedded and mounted. Specifically, in some embodiments, the embedded portion 71 of the air guide member 70 may be embedded in the embedded groove 2173 in the liquid leakage-proof structure 217, thereby may be mounted with the liquid leakage-proof structure 217 in a cooperating manner. In this embodiment, the boss 72 of the air guide member 70 may seal the embedded groove 2173 to prevent leakage of the liquid medium.

Further, in this embodiment, the power supply component B may further include a seal cover 110. The seal cover 110 may be sleeved on the first end wall 213 and may be configured to form a seal with the housing 10 and prevent liquid of the vaporizer A from flowing from the side wall between the housing 10 and the holder 21 into the power supply component B. The seal cover 110 may be a silicone cover on which a via hole provided corresponding to the vent hole 2131 and the first mounting hole 2132 is provided.

Further, in this embodiment, the power supply component B may further include a magnetic member 120. There may be two magnetic members 120, the two magnetic members 120 may be spaced and may respectively penetrate the seal cover 110 and the first end wall 213, and may be mounted corresponding to the first mounting hole 2132 for connecting the power supply component B and the vaporizer A.

Further, in this embodiment, the power supply component B may further include an electrode ejector pin 130. There may be two electrode ejector pins 130. The two electrode ejector pins 130 may be spaced and may respectively penetrate the seal cover 110 and the first end wall 213, and may be mounted in the second mounting hole 2133 for connecting the first circuit board 40 and the vaporizer A.

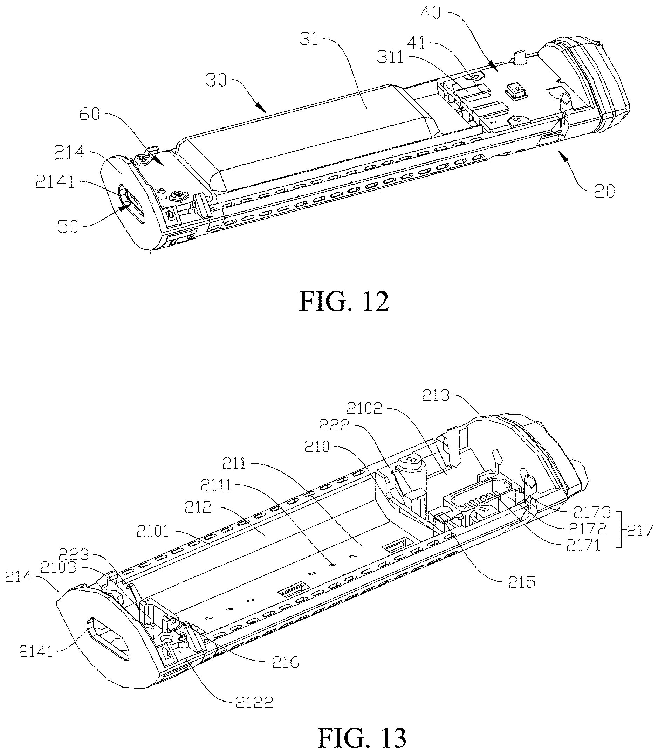

FIG. 12 and FIG. 13 show a second embodiment of an electronic vaporization device of the present invention, and a difference from the first embodiment is that the first avoidance hole 2123 and the second avoidance hole 2124 on the holder 21 may be omitted.

The first elastic abutting electrodes 222 of at least two conductive members 22a and 22b may extend toward the first opening 2104 and the top ends thereof may be provided higher than the side wall 212. Specifically, the first opening 2104 may be arranged side by side with the second opening 2105 in a flush manner, the first elastic abutting electrode 222 may penetrate toward the second opening 2105 of the second accommodation cavity 2102, and the top end of the first abutting portion 2224 may be provided protruding from the second opening 2105, so that the first abutting portion does not intersect with the side wall 212. The first circuit board 40 may be located above the second opening 2105, and may elastically abut against the first elastic abutting electrode 222. After the first conductive member 22a and the second conductive member 22b are injection molded with the holder 21, a conventional infrared detection device may be used to emit an infrared light source from the side of the second opening 2105 to the first elastic abutting electrodes 222 of the first conductive member 22a and the second conductive member 22b, obtain infrared images of the first elastic abutting electrodes 222 of the first conductive member 22a and the second conductive member 22b, and determine whether the first conductive member 22a and the second conductive member 22b completely overlap by recognizing and processing the infrared images. Specifically, whether the infrared images of the first abutting portion 2224 of the first elastic abutting electrodes 222 of the first conductive member 22a and the second conductive member 22b completely overlap, and when the first elastic abutting electrodes 222 of the first conductive member 22a and the second conductive member 22b completely overlap, completely overlap means that a deviation of the infrared images of the second elastic abutting electrodes 223 of the first conductive member 22a and the second conductive member 22b is within a predetermined range in the horizontal direction and the vertical direction, then the first elastic abutting electrodes 222 of the first conductive member 22a and the second conductive member 22b are mounted on the same horizontal line, and the first elastic abutting electrodes 222 of the first conductive member 22a and the second conductive member 22b may be in good contact with the first circuit board 40. When the first elastic abutting electrodes 222 of the first conductive member 22a and the second conductive member 22b do not overlap for a most part or do not overlap at all (an overlapping range is not within the predetermined range), the first elastic abutting electrodes 222 of the first conductive member 22a and the second conductive member 22b are not mounted on the same horizontal line. After the first circuit board 40 is mounted with the first elastic abutting electrodes 222 of the first conductive member 22a and the second conductive member 22b, a pre-pressure applied by the first circuit board 40 to the first elastic abutting electrode 222 of the first conductive member 22a and a pre-pressure applied by the first circuit board 40 to the first elastic abutting electrode 222 of the second conductive member 22b are different, so that contact resistance of the first elastic abutting electrode 222 of the first conductive member 22a and the first circuit board 40 and contact resistance of the first elastic abutting electrode 222 of the second conductive member 22b are different, so that contact stability of the first conductive member 22a and the first circuit board 40 and contact stability of the second conductive member 22b and the first circuit board 40 are not good.

The second elastic abutting electrodes 223 of at least two conductive members 22a and 22b may extend toward the first opening 2104 and the top end thereof may be provided higher than the side wall 212. Specifically, the first opening 2104 may be arranged side by side with the third opening 2106 in a flush manner, the second elastic abutting electrode 223 may penetrate toward the third opening 2106 of the third accommodation cavity 2103, and the top end of the first abutting portion 2224 may be provided protruding the third opening 2106, and may be slightly higher than the third opening 2106, so that the first abutting portion does not intersect with the side wall 212. The second circuit board 60 may be located above the third opening 2106 and elastically abut against the second elastic abutting electrode 223. After the first conductive member 22a and the second conductive member 22b are injection molded with the holder 21, the conventional infrared detection device may be used to emit an infrared light source from the side of the third opening 2106 to the second elastic abutting electrodes 223 of the first conductive member 22a and the second conductive member 22b, obtain infrared images of the second elastic abutting electrodes 223 of the first conductive member 22a and the second conductive member 22b, and determine whether the first conductive member 22a and the second conductive member 22b completely overlap by recognizing and processing the infrared images. Specifically, whether the infrared images of the second abutting portion 2234 of the second elastic abutting electrodes 223 of the first conductive member 22a and the second conductive member 22b completely overlap can be determined. Completely overlap means that a deviation of the infrared images of the second elastic abutting electrodes 223 of the first conductive member 22a the second conductive member 22b is within a predetermined range in the horizontal direction and the vertical direction. When the second elastic abutting electrodes 223 of the first conductive member 22a and the second conductive member 22b completely overlap, the second elastic abutting electrodes 223 of the first conductive member 22a and the second conductive member 22b are mounted on the same horizontal line, and the second elastic abutting electrodes 223 of the first conductive member 22a and the second conductive member 22b may be in good contact with the second circuit board 60. When the second elastic abutting electrodes 223 of the first conductive member 22a and the second conductive member 22b do not overlap for a most part or do not overlap at all (an overlapping range is not within the predetermined range), the second elastic abutting electrodes 223 of the first conductive member 22a and the second conductive member 22b are not mounted on the same horizontal line. After the second circuit board 60 is mounted with the second elastic abutting electrodes 223 of the first conductive member 22a and the second conductive member 22b, a pre-pressure applied by the second circuit board 60 to the second elastic abutting electrode 223 of the first conductive member 22a and a pre-pressure applied by the second circuit board 60 to the second elastic abutting electrode 223 of the second conductive member 22b are different, so that contact resistance of the second elastic abutting electrode 223 of the first conductive member 22a and the second circuit board 60 and contact resistance of the second elastic abutting electrode 223 of the second conductive member 22b and the second circuit board 60 are different, so that contact stability of the first conductive member 22a and the second circuit board 60 and contact stability of the second conductive member 22b and the second circuit board 60 are not good.

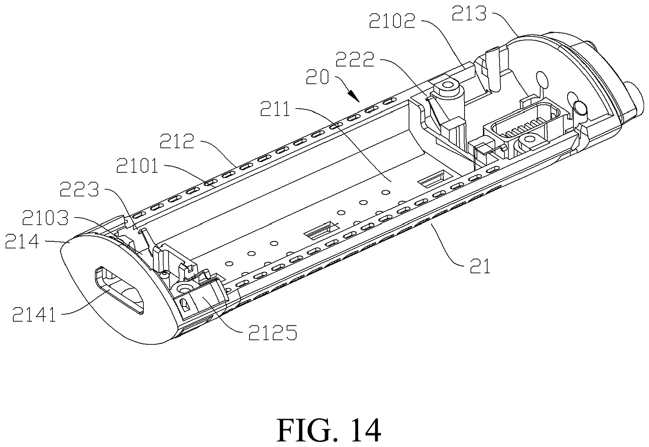

FIG. 14 shows a third embodiment of an electronic vaporization device of the present invention, a difference between the second embodiment and the third embodiment is that the second clamping structure 2122 on the holder 21 may be omitted. A limiting boss 2125 may be arranged on the side wall 212 and on two opposite sides of the third accommodation cavity 2103. The limiting boss 2125 may cause the third accommodation cavity 2103 to be more closed, and may be configured to place the second circuit board 60 into the third accommodation cavity 2103 for limiting to avoid the second circuit board 60 from disengaging.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. Additionally, statements made herein characterizing the invention refer to an embodiment of the invention and not necessarily all embodiments.

## Claims

1. A holder component, comprising:
a holder (21) configured to accommodate a battery core (30); and
a conductive structure (22) arranged on the holder (21),
wherein the battery core (30) comprises a first end (3101) and a second end (3102), and the conductive structure (22) extends from the first end (3101) of the battery core to the second end (3102) of the battery core, and
wherein the conductive structure (22) comprises at least two first elastic abutting electrodes (222) located proximate to the first end (3101) of the battery core (30) and at least two second elastic abutting electrodes (223) located proximate to the second end (3102) of the battery core.

2. The holder component of claim 1, wherein the holder (21) comprises a bottom wall (211), and the conductive structure (22) is arranged on the bottom wall (211) and is integrally formed with the bottom wall (211).

3. The holder component of claim 2, wherein the conductive structure (22) is integrally formed on a surface of the bottom wall (211) or inside the bottom wall (211).

4. The holder component of claim 1, wherein the battery core (30) comprises the first end (3101) and the second end (3102) extending along the length direction of the battery core (30).

5. The holder component of claim 1, wherein the conductive structure (22) comprises at least one conductive member (22a, 22b) comprising a conductive connection portion (221) that is elongated, and
wherein the entire length of the conductive connection portion (221) is integrally formed on the holder (21).

6. The holder component of claim 1, wherein the conductive structure (22) comprises at least two conductive members (22a, 22b),
wherein each of the conductive members (22a, 22b) is provided with the first elastic abutting electrode (222), and the first elastic abutting electrodes of the at least two conductive members (22a, 22b) extend toward the first end (3101) of the battery core (30), and/or
wherein each of the conductive members (22a, 22b) is provided with the second elastic abutting electrode (222), and the second elastic abutting electrodes of the at least two conductive members (22a, 22b) extend toward the second end (3102) of the battery core (30).

7. The holder component of claim 6, wherein the first elastic abutting electrodes (222) of two adjacent conductive members (22a, 22b) are mirror-symmetrically arranged, and/or
wherein the second elastic abutting electrodes (223) of two adjacent conductive members (22a, 22b) are mirror-symmetrically arranged.

8. The holder component of claim 5, wherein the holder (21) comprises a first accommodation cavity (2101) configured to accommodate the battery core (30), and
wherein the conductive connection portion (221) is arranged in the first accommodation cavity (2101).

9. The holder component of claim 1, wherein the first elastic abutting electrode (222) is configured to elastically abut against a first circuit board (40) arranged on the holder (21).

10. The holder component of claim 1, wherein the holder (21) comprises a second accommodation cavity (2102) configured to accommodate the first circuit board (40), and
wherein the first elastic abutting electrode (222) penetrates the second accommodation cavity (2102) to abut against the first circuit board (40).

11. The holder component of claim 10, wherein a first conductive layer is arranged at the contact end of the first elastic abutting electrode (222) configured to contact the first circuit board (40).

12. The holder component of claim 10, wherein the first elastic abutting electrode (222) comprises a first abutting portion (2224) configured to abut against the first circuit board (40) and a first guide portion (2225) arranged at one end of the first abutting portion (2224), and
wherein a first conductive layer is arranged at the junction of the first abutting portion (2224) and the first guide portion (2225).

13. The holder component of claim 1, wherein the second elastic abutting electrode (223) is configured to elastically abut against a second circuit board (60) arranged on the holder (21).

14. The holder component of claim 13, wherein the holder (21) is provided with a third accommodation cavity (2103) configured to accommodate the second circuit board (60), and
wherein the second elastic abutting electrode (223) penetrates the third accommodation cavity (2103) to abut against the second circuit board (60).

15. The holder component of claim 13, wherein a second conductive layer is arranged at the contact end of the second elastic abutting electrode (223) configured to contact the second circuit board (60).

16. The holder component of claim 13, wherein the second elastic abutting electrode (223) comprises a second abutting portion (2234) configured to abut against the second circuit board (60) and a second guide portion (2235) arranged at one end of the second abutting portion (2234), and
wherein a second conductive layer is arranged at the junction of the second abutting portion (2234) and the second guide portion (2235).

17. The holder component of claim 1, wherein a first support and positioning structure (215) that supports and positions the first elastic abutting electrode (222) is arranged on the holder (21).

18. The holder component of claim 17, wherein a second support and positioning structure (216) that supports and positions the second elastic abutting electrode (223) is arranged on the holder (21).

19. The holder component of claim 1, wherein the conductive structure (22) is provided with a through hole (2211) mechanically matching with the holder (21).

20. The holder component of claim 1, wherein the conductive structure (22) is sheet shaped, and
wherein the thickness direction of the conductive structure (22) is consistent with the thickness direction of the holder (21).

21. A power supply component, comprising:
the holder component of any one of claims 1 to 20,
the first circuit board (40) arranged on the holder component, and/or
the second circuit board (60) arranged on the holder component,
wherein the conductive structure (22) on the holder component is conductively connected to the first circuit board (40) and/or the second circuit board (60).

22. An electronic vaporization device, comprising:
the power supply component of claim 21; and
a vaporizer connected to the power supply component.
